# NOUVEAU FASCICULE DE BREVET EUROPEEN

(11) **EP 2 242 774 B2**
(45) Date de publication et mention de la décision concernant l'opposition: **26.09.2018**
(45) Mention de la délivrance du brevet: 09.01.2013
(21) Numéro de dépôt: 09722006.5
(22) Date de dépôt: 12.02.2009
(51) Int. Cl.: C08F 2/00, C08F 2/50, C08K 9/10, C08F 283/00, C08L 51/08

(54) **COMPOSITION AUTO-REPARANTE. MATERIAUX A AUTO-REPARATION PROCEDES D' AUTOREPARATION ET APPLICATIONS**
SELBSTREPARIERENDE ZUSAMMENSETZUNG, SELBSTREPARIERENDE WERKSTOFFE SOWIE SELBSTREPARATURVERFAHREN UND -ANWENDUNGEN
SELF-REPAIRING COMPOSITION, SELF-REPAIRING MATERIALS, SELF-REPAIRING METHODS AND APPLICATIONS

(30) Priorité: 15.02.2008 FR 0800839
(43) Date de publication de la demande: 27.10.2010
(73) Titulaire: Catalyse, 13011 Marseille (FR)
(72) Inventeur: PERICHAUD, Alain, F-13013 Marseille (FR); DEVASSINE, Mickaël, F-13400 Aubagne (FR)
(74) Mandataire: Schmidt, Martin Peter
(86) Numéro de dépôt international: PCT/FR2009/000160
(87) Numéro de publication internationale: WO 2009/115671

(56) Documents cités:
- WO-A1-03/002679
- US-A1- 2003 212 162
- US-A1- 2005 250 878
- US-A1- 2007 029 653

## Description

### Domaine de l'invention

L'invention concerne l'autoréparation de matériaux organiques, en particulier des matériaux polymères, ou de matériaux inorganiques ou de matériaux composites quand ces matériaux, au cours de leur exploitation, subissent des dégradations liées à leur environnement se manifestant par l'apparition de crevasses, de fentes, de fissures, de craquelures ou autres, qu'il faut combler rapidement pour en arrêter le développement, étant rappelé que tout environnement dans lequel se trouvent exploités lesdits matériaux est, par définition, agressif puisqu'il comporte tous les ingrédients propres, par exemple, à l'oxydation, à la photo-dégradation, à la thermo-dégradation ou encore à des blessures par choc, par érosion à l'origine de dégradations physico-chimiques, chimiques, biochimiques, biologiques plus sévères.

L'invention concerne plus particulièrement l'autoréparation de dégradations produites sur des matériaux organiques, en particulier des polymères, matériaux inorganiques ou matériaux composites, en cours d'exploitation, l'autoréparation de ces matériaux consistant en :
▪ Une composition polymérisable sélectionnée et micro-encapsulée formée d'au moins un composé polymérisable sélectionné et dont les microcapsules sont incorporées dans lesdits matériaux à auto-restaurer ou déposées sur les surfaces externes desdits matériaux,
▪ Et un agent naturel de déclenchement de la polymérisation de la composition polymérisable, en l'absence de catalyseur de polymérisation, dès lors que cet agent naturel est présent dans l'environnement d'exploitation des matériaux et au contact de ladite composition libérée des microcapsules.

L'invention concerne également les matériaux organiques, inorganiques ou composites d'autoréparation dans lesquels sont incorporés les seules microcapsules de la composition polymérisable sélectionnée, ou bien sont déposées sur leurs surfaces externes.

L'invention concerne aussi les procédés d'autoréparation des matériaux organiques en particulier les matériaux polymères, les matériaux inorganiques et les matériaux composites dégradés, par incorporation ou par dépôt sur leur surface externe des seules microcapsules de la composition polymérisable sélectionnée.

L'invention concerne enfin l'application de la composition d'autoréparation à la restauration de matériaux organiques, inorganiques ou composites dégradés, au fur et à mesure que ces dégradations se produisent, par l'utilisation de compositions polymérisables sélectionnées et micro-encapsulées pour le comblement automatique de fissures, craquelures, crevasses, fentes ou autres, dont la polymérisation se produit automatiquement par l'action d'un agent de déclenchement présent dans l'environnement et ce, en l'absence de tout catalyseur de polymérisation habituellement mis en oeuvre, ledit agent de déclenchement étant choisi parmi le rayonnement ultraviolet ou l'humidité de l'air ambiant ou l'oxygène de l'air.

### Etat de la technique

Depuis longtemps, il a été observé que tous les matériaux, qu'ils soient d'origine organique, tels que les polymères ou inorganiques ou composites c'est-à-dire associant les deux premiers types de matériaux, sont soumis à l'usure du temps, c'est-à-dire qu'ils vieillissent. C'est pourquoi au cours de leur cycle de vie, ces matériaux subissent en particulier dans leur milieu d'exploitation, des contraintes et agressions de diverses origines telles que physiques, mécaniques, physico-chimiques, chimiques, biochimiques, biologiques, créant des dégradations au sein desdits matériaux mais plus particulièrement à leur surface. Parmi les dégradations les plus fréquemment observées, peuvent être retenues des fissures, des fêlures, des crevasses, des craquelures, dues par exemple à des efforts physiques répétés, mais dues aussi au vieillissement des matériaux par le fait d'oxydation, de dégradations photoniques, de thermo-dégradations, d'impacts, par érosion et bien d'autres causes encore.

Ces diverses dégradations peuvent provoquer la fragilisation mécanique des matériaux agressés, qui peut entraîner par exemple dans le cas d'appareillages réalisés avec ces matériaux, d'abord des dysfonctionnements de ces appareillages mais surtout leur mise hors d'usage par un vieillissement prématuré les condamnant à une fin de vie précoce.

C'est pourquoi toutes ces dégradations doivent être traitées au fur et à mesure de leur apparition pour empêcher leur évolution vers un état plus dégradé et pour augmenter ainsi la longévité du cycle de vie des matériaux concernés.

Dans le cas par exemple, de l'apparition de fissures, de craquelures, fentes, crevasses, d'alvéoles dues à des impacts ou autres dégradations, il est nécessaire de combler rapidement les vides ainsi créés, lorsque cela est possible, par un matériau de comblement de nature appropriée, ce matériau de comblement ayant la capacité non seulement à combler mais aussi à adhérer aux dits matériaux et à reconstituer, si possible leur état de surface initiale. Toutefois, les conditions d'exploitation des matériaux concernés au cours de leur cycle de vie, peuvent être particulièrement sévères, rendant, dès lors, le traitement curatif des dégradations particulièrement difficile à réaliser.

Dans des domaines particuliers tels que par exemple le domaine spatial, certains dispositifs comme les satellites, navettes ou autres, nécessitent des revêtements protecteurs pour pouvoir fonctionner correctement dans leur environnement d'exploitation. L'endommagement de ces revêtements peut conduire à une fragilisation de l'appareil puis à sa destruction : il faut se souvenir de la catastrophe de la navette spatiale Columbia en 2003. Les satellites gravitant autour de la Terre et les navettes spatiales rentrant, à leur retour, dans les couches gazeuses de la Terre, doivent en effet être protégés contre les conséquences des chocs de la rencontre d'objets, débris, météorites présents dans l'espace, ou de chocs thermiques. Ces divers objets entrant en collision avec un satellite par exemple provoquent des impacts à l'origine de micro-cassures, fissures, craquelures ou autres qui peuvent se propager et générer d'abord la fragilisation puis un dysfonctionnement de l'appareil concerné. Le meilleur moyen actuel pour résoudre une panne occasionnée par des chocs, consiste à envoyer une navette spatiale pour réparer sur place ou récupérer le satellite. Ces opérations de dépannage impliquent des coûts financiers extrêmes et une inactivité momentanée des fonctions assumées par ledit satellite.

Pour remédier aux effets de la dégradation due à l'apparition de microfissures ou de micro-cassures, une solution permettant une autoréparation des matériaux a retenu l'attention des chercheurs et industriels, en particulier dans la dernière décennie.

Dans une série de documents (brevet US 6 858 659, brevet US 6 518 330 et Nature 409, 795-797, 2001), S. R. White et al décrivent qu'ils ont déjà encapsulé un agent d'autoréparation qui est du dicyclopentadiène dans un premier type de microcapsules d'urée formaldéhyde. Ce premier type de microcapsules contenant cet agent ainsi qu'un autre type de microcapsules contenant un catalyseur de polymérisation de Grubbs, qui est du dichlorure de bis(tricyclohexylphosphine) benzylidine ruthenium (IV), ont été inclus dans une matrice polymère formée de résines époxydes. Ces auteurs ont observé après contrainte mécanique, la rupture des deux types de microcapsules suivie de la libération et de la polymérisation de l'agent de réparation.

Cependant, des problèmes de stabilité du catalyseur demeurent encore présents.

Un autre document (US 2004/0007784) décrit l'autoréparation de matériaux grâce à l'incorporation de microcapsules contenant un monomère fluable qui est le norbornène (bicyclo[2,2,1]hept-5-ène ou le triéthoxysilylnorbomène ou un oligomère par exemple oligomère du dicyclopentadiène, qui polymérise au contact d'un agent de polymérisation tel que du ruthenium ou de l'indium, fixé à la surface des capsules de monomères ou d'oligomères rendant cet agent peu disponible pour la polymérisation.

Un autre document (US 7192993) décrit un procédé d'autoréparation au moyen d'une peinture corrosive contenant des capsules d'un liquide polymère qui est du polybutène en solution dans un solvant, des phénols avec agent anti-corrosion, ce procédé étant basé sur la libération du contenu des capsules pour occuper la zone à restaurer.

Mais ce procédé d'autoréparation, d'une part, relargue dans l'environnement des solvants accompagnant le polymère, dès lors que la solution de ce polymère est libérée des capsules et d'autre part, met en oeuvre un polymère de composition précise dont le choix peut être incompatible avec la composition du matériau à auto-restaurer, la qualité d'accrochage du polymère dans ce cas, n'étant pas toujours pas assurée.

Dans un autre document (US 2001/0050032, C. Dry), il est prévu de réaliser une matrice renforcée par des fibres auto-réparantes chargées en monomères polymérisables tels que le méthacrylate de méthyle ou le styrène, étant évident que les fibres auto-réparantes présentes, induisent potentiellement plus de pertes mécaniques dans la matrice que pourrait induire la présence de capsules contenant lesdits monomères.

Dans un article I.Bond (Composites Science and Technology 2005 Vol 65 No. 11-12 pp. 1791-1799) décrit un procédé d'autoréparation par une couche de polymère époxyde déposée sur un substrat qui contient un réseau tridimensionnel de micro-canaux, lesdits micro-canaux pouvant provoquer une certaine fragilité mécanique de ce substrat, entraînant potentiellement des pertes de caractéristique mécanique, pertes qui pourraient être supérieures à celles que l'on pourrait constater lors de l'intégration de microcapsules dans ce même substrat.

Toutefois, les méthodes décrites dans les documents précités font appel à un catalyseur dont on a précédemment souligné le manque de stabilité et qui est souvent constitué par une substance dangereuse à manipuler et nocive pour l'environnement.

En effet, le catalyseur est soit encapsulé dans un premier type de capsules, soit dispersé directement dans une matrice polymère. Son rôle est de permettre la polymérisation de l'agent d'autoréparation contenu dans un second type de microcapsules dispersées dans le matériau. Il apparaît nécessaire que la rupture des microcapsules contenant l'agent polymérisable de réparation se produise, soit simultanément à la rupture des microcapsules contenant le catalyseur si celui-ci est également encapsulé, soit que les seules microcapsules contenant l'agent polymérisable de restauration soient dispersées dans le matériau d'une manière telle que l'agent puisse migrer à la rencontre du catalyseur si celui-ci est dispersé directement dans la matrice polymère. Dans l'un ou l'autre cas, les deux événements apparaissent aléatoires, sans certitude de rencontre, donc de réussite.

Dans un article Z.O. Oyman et al (Progress in Organic Coatings, 54, 198-204, 2005) ont étudié l'oxydation d'huiles siccatives comportant des liaisons non conjuguées (huile de lin) ou conjuguées (huile de tung) en présence d'un catalyseur, le Co(II)-2-éthylhexanoate. Dès lors, il apparaît établi à partir de ce document que les huiles siccatives forment, en présence d'oxygène, un film polymère protecteur rigide.

Dans un article J. Comyn (International Journal of Adhesion & Adhesives, 18, 247-253, 1998) a étudié la polymérisation, en présence d'humidité relative, de substances utilisées comme adhésifs et enduits tels que les cyanoacrylates, les silicones et les isocyanates pour lesquels il est connu que ces substances réagissent en présence d'humidité pour former un film polymère protecteur.

Dans un autre document (US 6,797,107) est décrite une composition cyanoacrylate solide non encapsulée, capable de se liquéfier à des températures légèrement supérieures à l'ambiant et de polymériser après liquéfaction.

Dans un autre document (US 2005/025,0878) est décrit un matériau composite auto-réparant dans lequel sont placés :
▪ Des substances polymérisables telles que des (méthyl)acrylates, du styrène, de l'éthylène, encapsulées dans un premier type de capsules
▪ Et un activateur de polymérisation qui est un catalyseur, un durcisseur comme un diol ou une diamine, une résine époxy ou un initiateur tel qu'un peroxyde, cet activateur de polymérisation étant encapsulé dans un deuxième type de capsules, c'est-à-dire complètement isolé des substances polymérisables.

Toutefois, selon ce document il apparaît que la polymérisation des substances polymérisables ne peut s'effectuer que s'il y a libération simultanée des composants contenus dans les deux types de capsules et la certitude de leur mise en contact, ce qui est un évènement aléatoire, et ce d'autant plus que la distribution de chaque type de microcapsules dans le matériau composite peut être hétérogène en densité, insuffisant en concentration, pour assurer la réparation de dégradations au fur et à mesure qu'elles se produisent.

Un autre document (US 2007/0029653) décrit également un matériau auto-réparant formé :
▪ De substances polymérisables telles que des résines époxy, des isocyanates, des résines vinyliques, ou acryliques, encapsulées dans un premier type de capsules ou équivalent
▪ Et de durcisseur tel que polyols, polyamine, diamine encapsulés dans un deuxième type de capsules ou équivalent.

Ces deux types de capsules contenant ces deux types de réactifs sont placés dans le matériau auto-réparant et les substances polymérisables ne peuvent polymériser que si les deux réactifs sont simultanément libérés de leur enveloppe et entrent en contact l'un avec l'autre. Cet événement est naturellement aléatoire et les moyens décrits dans ce document produisent les mêmes inconvénients que ceux évoqués dans le document précédent.

### Sommaire de l'invention

Le problème posé tel qu'il apparaît après l'examen de l'état de la technique et non encore résolu de manière satisfaisante, est de réaliser, avec certitude de succès, l'autoréparation des dégradations subies par des matériaux organiques, en particulier les matériaux polymères ou des matériaux inorganiques, ou des matériaux composites, dégradations provoquées par leurs conditions d'exploitation environnementale. Cette autoréparation doit se produire au fur et à mesure que ces dégradations apparaissent pour en empêcher l'aggravation et replacer lesdits matériaux dans un état restauré le plus proche possible de leur état initial, et doit être telle qu'elle assure la protection de l'environnement de tout relargage de matières premières n'ayant pas réagi, tels que des composés polymérisables, des catalyseurs de polymérisation et autres.

Dès lors, l'invention poursuit le but de créer un matériau auto-réparant susceptible d'être produit et mis en oeuvre de manière simple et économique, l'autoréparation de ce matériau s'opérant en l'absence de catalyseur, par polymérisation de compositions polymérisables intégrées aux dits matériaux, ladite polymérisation n'étant plus aléatoire mais, en pratique, certaine.

Selon l'invention, ce but est atteint grâce à une composition polymérisable fluante d'autoréparation micro-encapsulée constituée par au moins un composé sélectionné, polymérisable en l'absence de catalyseur de polymérisation, dont la polymérisation se produit spontanément en présence d'un agent de déclenchement externe au matériau à auto-restaurer, naturellement et en permanence présent dans l'environnement dans lequel est exploité ledit matériau, ledit agent de déclenchement étant choisi parmi le rayonnement ultraviolet ou l'humidité de l'air ambiant ou l'oxygène de l'air.

La composition polymérisable selon l'invention, d'autoréparation de dégradations subies par des matériaux organiques en particulier des matériaux polymères, des matériaux inorganiques ou des matériaux composites en cours d'exploitation, par comblement de dégradations telles que fissures, craquelures, fentes ou autres provoquées par des conditions plus ou moins agressives développées dans l'environnement d'exploitation telles que des phénomènes d'oxydation, de thermo-dégradation, de photo-dégradation, d'impacts et autres, ladite composition polymérisable étant encapsulée dans des microcapsules frangibles, se caractérise en ce que :
(i) La composition polymérisable micro-encapsulée est intégrée, seule, au matériau à auto-réparer par incorporation dans sa masse ou par revêtement de ses surfaces externes,
(ii) ladite composition, une fois libérée des microcapsules, polymérise spontanément sans catalyseur, en présence d'un agent de déclenchement de la polymérisation, externe au matériau à auto-restaurer mais naturellement présent dans l'environnement d'exploitation, ledit agent de déclenchement étant choisi parmi le rayonnement ultraviolet ou l'humidité de l'air ambiant ou l'oxygène de l'air.

L'invention concerne également :
▪ Les matériaux organiques, en particulier les matériaux polymères, les matériaux inorganiques et les matériaux composites auxquels sont intégrées les seules microcapsules de composition polymérisable constituée d'au moins un composé polymérisable en l'absence de catalyseur préalablement sélectionné
▪ Les procédés d'autoréparation desdits matériaux subissant des dégradations auxquels sont intégrées les seules microcapsules contenant la composition polymérisable, en l'absence de catalyseur, constituée d'au moins un composé polymérisable sélectionné
▪ Les applications nouvelles concernant les compositions d'autoréparation, les matériaux auto-réparant et les procédés d'autoréparation selon l'invention.

### Description détaillée de l'invention

Ainsi l'objet de l'invention, par différence avec l'état de la technique qui incorpore simultanément dans des matériaux dégradables à auto-restaurer, quand ils sont dégradés, un composé polymérisable micro-encapsulé dans un premier type de capsules et un catalyseur de polymérisation, ou un durcisseur, protégé de tout contact avec le composé polymérisable par encapsulation dans un autre type de capsules avant sa libération, associe selon une combinaison nouvelle :
▪ Une composition spontanément polymérisable et micro-encapsulée, formée d'au moins un composé polymérisable sélectionné, cette composition micro-encapsulée étant intégrée seule, en l'absence de catalyseur, aux matériaux dégradables à auto-restaurer et
▪ Un agent de déclenchement de la polymérisation spontanée, en l'absence de catalyseur, externe aux matériaux dégradables à auto-restaurer, mais naturellement présent dans l'environnement d'exploitation desdits matériaux, ledit agent de déclenchement étant choisi parmi le rayonnement ultraviolet ou l'humidité de l'air ambiant ou l'oxygène de l'air..

L'agent de déclenchement, selon l'invention, de la polymérisation spontanée, en l'absence de catalyseur, d'une composition polymérisable micro-encapsulée, intégrée seule aux matériaux à auto-restaurer, formée d'au moins un composé sélectionné polymérisable, est choisi dans le groupe constitué par le rayonnement ultra-violet, l'humidité relative et l'oxygène ambiant, présents dans l'environnement d'exploitation desdits matériaux au fur et à mesure de la libération des microcapsules..

Le choix d'un tel agent de déclenchement de la polymérisation spontanée d'un composé polymérisable sélectionné entrant dans la composition selon l'invention et ce, en l'absence de tout catalyseur, s'impose dans le cadre de l'invention par le fait que, contrairement à l'état de la technique, l'agent de déclenchement de la polymérisation :
- est immédiatement et toujours disponible pour cette polymérisation puisque naturellement présent dans l'environnement, au fur et à mesure que s'effectue la libération de la composition polymérisable micro-encapsulée et intégrée dans les matériaux à autoréparation par rupture desdites microcapsules,
- rend la capacité de polymérisation de la composition polymérisable quasiment certaine et totale en pratique, puisque cet agent, par opposition à l'état de la technique ne nécessite que la seule libération de la composition polymérisable intégrée aux matériaux à auto-réparer pour polymériser.
- Ne peut relarguer dans l'environnement qui dès lors est protégé, ni catalyseur, ni durcisseur, ni composé polymérisable puisque ladite composition polymérise spontanément en présence dudit agent de déclenchement de la polymérisation, naturellement présent dans l'environnement et immédiatement disponible sur le site, étant entendu que la polymérisation, selon l'invention, s'effectue en l'absence de tout catalyseur qui se retrouverait dans l'environnement, si un tel catalyseur était mis en oeuvre et que la composition polymérisable, dès lors qu'elle est libérée des microcapsules est instantanément polymérisée puisque l'agent de déclenchement de la polymérisation est totalement disponible.

La composition polymérisable fluante d'autoréparation selon l'invention comprend au moins un composé polymérisable qui est un monomère et/ou un oligomère et/ou un prépolymère, sélectionné selon l'agent sollicité de déclenchement de la polymérisation. Ce au moins un composé polymérisable peut être mis en oeuvre seul ou en mélange quand ils sont plusieurs, éventuellement associé à un photo-amorceur de polymérisation radicalaire ou cationique selon le choix fait pour le au moins un monomère et/ou oligomère et/ou prépolymère.

Selon l'agent sollicité pour le déclenchement de polymérisation spontanée, pour intervenir selon l'invention dans l'autoréparation de matériaux organiques, inorganiques ou composites subissant des dégradations dans leur environnement d'exploitation, la composition polymérisable micro-encapsulée, intégrée, seule, auxdits matériaux à auto-restaurer par incorporation dans leur masse ou par dépôt sur leurs surfaces externes, est formée d'au moins un composé polymérisable sélectionné parmi les composés polymérisables que sont les monomères ou des oligomères de ces monomères c'est-à-dire des polymères de masses molaires faibles ou des prépolymères.

### Polymérisation par rayonnement ultra-violet :

Quand, selon l'invention, l'agent sollicité de déclenchement de la polymérisation est un rayonnement ultraviolet, la composition polymérisable micro-encapsulée est faite d'au moins un composé sélectionné polymérisable dont la polymérisation est spontanée en présence dudit agent de déclenchement de la polymérisation, ce au moins un composé polymérisable étant choisi dans le groupe constitué par les monomères et/ou les oligomères et/ou les prépolymères de type acrylique et/ou méthacrylique ou de type époxy ou de type vinyle éther.

Lorsque la composition polymérisable est constituée d'au moins un composé polymérisable choisi dans le groupe constitué par les monomères et/ou les oligomères et/ou les prépolymères de type acrylique et/ou méthacrylique, ces composés répondent à la formule générale (I) : 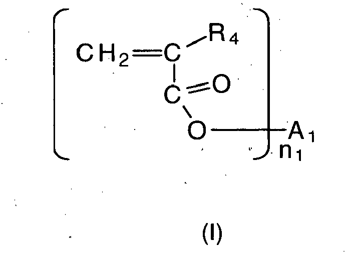 dans laquelle
▪ R₄ est l'hydrogène ou un méthyl,
▪ A₁ est un reste organique,
▪ n₁ est un nombre entier de 1 à 6 limites incluses.

Tous ces composés peuvent être mis en oeuvre seuls ou en mélange.

Peuvent être plus particulièrement cités les monomères, oligomères ou prépolymères acrylates choisis parmi les composés tels que : méthyl-acrylate, méthylméthacrylate, éthylacrylate, iso-propylméthacrylate, n- hexylacrylate, stéarylacrylate, allylacrylate, phénoxyéthyl acrylate, triméthylolpropaneformal acrylate, lauryl acrylate, dihydrodicyclopentadiényl acrylate, 4-t-butyléthylène glycol diacrylate, diéthylène glycol diacrylate, triéthylène glycol diméthacrylate, dipropylène glycol diacrylate, tripropylène glycol diacrylate, butanediol diacrylate, hexanediol diacrylate, 1,3-propanediol diacrylate, glycérol triacrylate, triméthylole propane triacrylate, ethoxylated triméthylolpropane triacrylate, 1,3-propanediol diméthacrylate, 1,2,4-butanetriol triméthacrylate, 1,4-cyclohexanediol diacrylate, pentaérithrytole triacrylate, pentaérithrytole tétraacrylate, pentaérithrytole tetraméthacrylate, sorbitol hexaacrylate bis [1-(2-acryloxy)]-p-éthoxyphénylediméthyleméthane,bis[1-(3-acryloxy-2-hydroxy)]-p-propoxyphenylméthane, des bis- acrylate et bisméthacrylate de polyéthylène glycol de masse molaire 200-500, les mélanges polymérisables des monomères précités et des oligomères acrylates tels que : polyétheracrylates modifiés avec amine, polyuréthane acrylate, polyester acrylate, polyéther acrylate, acrylate multifonctionnel modifié en amine, polyester hexaacrylate modifié en acide gras, polyester tétraacrylate, polyester méthacrylate fonctionnalisé en acide, polyester acrylate hexafonctionnel, polyester acrylate hexafonctionnel modifié en acide gras, uréthane diacrylate aliphatique, uréthane triacrylate aliphatique, uréthane acrylate aliphatique hexafonctionnel, silicone acrylate.

Ces composés polymérisables de type acrylate ou méthacrylate de formule (I) requièrent une polymérisation par photo-polymérisation par voie radicalaire et requièrent, dès lors, la présence de photo-amorceur radicalaire dans la composition polymérisable.

Le photo-amorceur radicalaire intervenant dans le cadre de l'invention pour la photo-polymérisation radicalaire de la composition polymérisable est associé en mélange à ladite composition, le mélange obtenu étant micro-encapsulé et formant la composition polymérisable d'auto-restauration selon l'invention.

Le photo-amorceur radicalaire pour la photo-polymérisation radicalaire de la composition polymérisable répondant à la formule générale (I) est choisi dans le groupe constitué par les composés organiques contenant au moins un cycle phényl substitué par un groupe carbonyle, azoté ou soufré et plus particulièrement, les composés organiques contenant dans leur molécule des liaisons chimiques capables de se rompre de façon homolytique sous rayonnement UV, et au moins un cycle phényl substitué par un groupe carbonyle, phosphoré, azoté ou soufré.

Peuvent être cités les photoamorceurs radicalaires choisis parmi les composés tels que : 1-hydroxy-cyclohexyl-phényl-cétone, benzophénone, 2-hydroxy-2-méthyl- 1-phényl-1-propanone, méthylbenzoylformate, α,α-diméthoxy-α-phénylacétophénone, 2-benzyl-2-(diméthylamino)-1-[4-(4-morpholinyl)phényl]-1-butanone, 2-méthyl-1-[4-(méthylthio)phényl]-2-(4-morpholinyl)-1-propanone, diphényl (2,4,6-triméthylbenzoyl)-phosphine oxyde, phosphine oxyde, phényl bis (2,4,6-triméthyl benzoyle)-phosphine oxyde, phosphine oxyde, phényl bis(2,4,6-triméthyl benzoyle), bis (éta 5-2,4-cyclopentadien-1-yl)bis[2,6-difluoro-3-(1H-pyrrol-1-yl)phényle] titanium.

Tous les composés précités sont commercialisés par exemple sous les marques déposées suivantes: Irgacure® 184, 500, 1000, 2959, 651, 369, 907, 1300, 819, 819DW, 2005, 2010, 2020, 784, Darocur® 1173, MBF, TPO, et 4265, par la société Ciba Specialty Chemicals Inc.

Lorsque la composition polymérisable par photo-polymérisation est constituée d'au moins un composé polymérisable choisi dans le groupe constitué par les monomères et/ou les oligomères et/ou les prépolymères de type époxy, mono, di ou tri fonctionnel, ces composés répondent à la formule générale (II) : 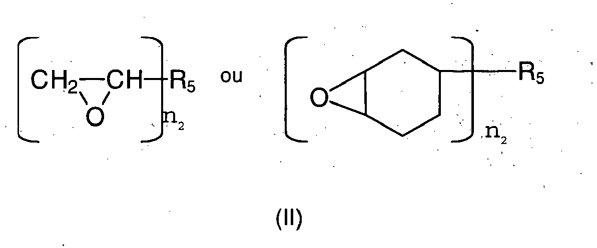 dans laquelle
n₂ est un nombre entier de 1 à 3, et
R₅ est un reste d'un radical organique.

Tous ces composés peuvent être mis en oeuvre seuls ou en mélange.

Peuvent être cités plus particulièrement les époxydes choisis parmi les composés suivants : 3,4-époxycyclohexylméthyl-3,4-époxycyclohexane carboxylate commercialisé sous la marque Cyracure UVR 6105 et 6110 de Union Carbide Corp. et Uvacure 1500 de UCB Chemicals, 3,4-époxy-6-méthylcyclohexylméthyl-3,4-époxy-6-méthylcyclohexène carboxylate commercialisé sous la marque ERL-4221, bis(3,4-époxy-6-méthylcyclohexylméthyl)adipate commercialisé sous la marque Cyracure® UVR 6128 de Union Carbide Corp., octadécylène oxyde, épichorhydrine, styrène oxyde, vinylcyclohexène oxyde, glycidol, glycidyl méthacrylate, diglycidyl éther de bisphénol A commercialisé sous la marque EPON® 828, 825, 1004 et 1010 de Shell Chemical Co , vinylcyclohexène dioxyde commercialisé sous la marque ERL-4206 de Union Carbide Corp., bis (2,3-époxycyclopentyl éther) commercialisé sous la marque ERL-0400 de Union Carbide Corp, polypropylène glycol modifié avec époxy (ERL 4050 et ERL-4052 de Union Carbide Corp.), dipentène dioxyde (ERL-4269), polybutadiène époxyde (Oxiron 2001 de FMC Corp.), résine siliconée contenant époxy, résine époxy ignifugée (Dow Chemical Co.), 1,4-butanediol diglycidyl éther de phénolformaldéhyde novolac (DEN-431 et DEN 438 de Dow Chemical Co.), vinylcyclohexène monoxyde 1,2-époxyhexadécane (UVR-6216 de Union Carbide Corp.), des alkyl (C8-C12) glycidyl éthers (HELOXY Modifier 7 et 8, Shell Chemical Co.), diglycidyl éther de 1,4-butanediol, diglycidyl éther of néopentyl glycol, (HELOXY Modifier 68), diglycidyl éther de cyclohexane diméthanol, triméthylol éthane triglycidyl éther, triméthylol propane triglycidyl éther, polyglycidyl éther d'un polyol aliphatique, polyglycole diépoxyde (HELOXY Modifier 67, 68, 107, 44, 48, 84 et respectivement 32 de Shell Chemical Co), bisphénol F diépoxydes (EPN-1138 et GY-281 de Ciba-Geigy Corp.), et des glycidyl acrylates et méthacrylates.

Lorsque la composition polymérisable par photo-polymérisation est constituée d'au moins un composé choisi dans le groupe constitué par les monomères et/ou les oligomères et/ou les prépolymères de type vinyl-éther, ces composés répondent à la formule générale (III) suivante : 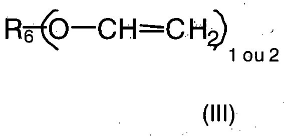 dans laquelle R₆ est un reste d'un dérivé organique.

Tous ces composés peuvent être mis en oeuvre seuls ou en mélange.

On peut citer plus particulièrement les vinyléthers choisis parmi les composés suivants : les : cyclohexanediméthanol divinyléther, diéthylaminoéthylvinyléther, tétraéthylèneglycol divinyléther, triéthylèneglycol divinyléther, cyclohexane diméthanol vinyléther, cyclohexyl vinyléther, n-dodécyl vinyléther, lauryl vinyléther, triéthylèneglycol divinyléther, 4-hydroxybutylvinyléther.

Les composés polymérisables de type époxyde de formule (II), ou vinyléther de formule (III), requièrent des mécanismes de photo-polymérisation par voie cationique et dès lors, la présence de photo-amorceurs cationiques.

Le photo-amorceur cationique intervenant dans le cadre de l'invention pour la photo-polymérisation cationique de la composition polymérisable est associé en mélange à ladite composition, le mélange obtenu étant micro-encapsulé et formant la composition polymérisable d'autoréparation selon l'invention.

Le photo-amorceur cationique pour la photo-polymérisation cationique de la composition polymérisable répondant aux formules (II) et (III) est choisi dans le groupe constitué par les composés ioniques contenant des cations organiques comme des composés aryle sulfonium ou aryle iodonium avec des contre-ions tels que SbF6 -, PF6-, AsF6-, BF4-, PO4- capables d'attaquer de manière électrophile ladite composition polymérisable, en créant des espèces cationiques capables ultérieurement de poursuivre la polymérisation.

Préférentiellement, le photo-amorceur cationique est un sel d'aryle sulfonium, notamment les triaryle sulfonium phosphate, triarylsulfonium antimonate, triarylsulfonium hexafluorophosphate, (UVI 6974, UVI 6992), ou un sel d'aryle iodonium comme les diaryliodonium hexafluoroantimonate, bisdodécylphényliodonium hexafluoroantimonate, iodonium, (4-méthylphényl)[4-(2-méthylpropyl)phényl]-hexafluorophosphate (1-) (CGI 552) commercialisés par Ciba® Specialty Chemicals ou par Union Carbide Corporation.

Les concentrations en composés polymérisables de la composition polymérisable d'autoréparation exprimées en % en poids, sont les suivants :
1) 90 à 99%, de préférence 95 à 99%, desdits composés polymérisables,
2) 1 à 10% desdits photo-amorceurs, de préférence 1% à 5%.

### Polymérisation par l'humidité relative ambiante :

Quand, selon l'invention, l'agent de déclenchement de la polymérisation sollicité est l'humidité relative ambiante, la composition micro-encapsulée est formée d'au moins un composé polymérisable sélectionné dont la polymérisation est spontanée en présence dudit agent de déclenchement de la polymérisation et choisi dans le groupe constitué par les monomères et/ou les oligomères et/ou les prépolymères de type :
▪ cyanoacrylate mono ou plurifonctionnel de formule IV : 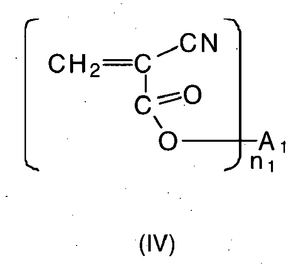 dans laquelle :
   A₁ est un reste organique,
   n₁ est un nombre entier de 1 à 6.

Tous ces composés peuvent être mis en oeuvre seuls ou en mélange.
▪ ou isocyanate plurifonctionnel, de formule (V) :

   O=C=N-R-N=C=O (V)

   dans laquelle R est un groupement organique aromatique ou aliphatique pouvant contenir des fonctions isocyanate ou autres,

Tous ces composés peuvent être mis en oeuvre seuls ou en mélange.
▪ ou silane de formule (VI) :

   XnSi(OR)4-n (VI)

   dans laquelle :
   - n est égal à 0 ou 1
   - X est un groupe fonctionnel choisi pour sa compatibilité avec la résine dont le silane doit améliorer l'adhérence. Ce peut être un groupe vinyle, acryle, amino, mercapto ou époxy.

Tous ces composés peuvent être mis en oeuvre seuls ou en mélange.

Quand le au moins un composé sélectionné polymérisable est de type cyanoacrylate, il est plus particulièrement choisi parmi les composés suivants : cyanoacrylate de méthyle, 3,3'-(1,4-phénylène)bis(2-cyanoacrylate) de diéthyle, 3-(3-chloro-4-méthoxyphényl)-2-cyanoacrylate d'éthyle, 2-cyanoacrylate d'éthyle, 3-(5-(2-chloro-5-(trifluorométhyl)phényle)-2-furyl)-2-cyanoacrylate d'éthyle, 3-(5-(2-chlorophényl)-2-furyl)-2-cyanoacrylate d'éthyle, 3-(5-(3-chlorophényl)-2-furyl)-2-cyanoacrylate d'éthyle, 3-(5-(4-chlorophényl)-2-furyl)-2-cyanoacrylate d'éthyle, 3-(5-bromo-2-furyl)-2-cyanoacrylate, 3-(5-(4-(aminosulfonyl)phényl)-2-furyl)-2-cyanoacrylate.

Quand le au moins un composé sélectionné polymérisable est de type isocyanate, il est plus particulièrement choisi parmi les composés suivants : 1,6 hexaméthylène diisocyanate, méthylène diphényle diisocyanate, toluène-2,4-diisocyanate, toluène-2,6-diisocyanate, isophorone diisocyanate, naphtylène-1,5 diisocyanate, para-xylylène diisocyanate, m-tétraméthylxylène diisocyanate, méta-xylylène diisocyanate, dicyclohexylméthane4,4'-diisocyanate, triphénylméthane triisocyanate, 1, 6, 11-undécane triisocyanate, 2,2-bis (isocyanatométhyl) propyl isocyanate, 4-(isocyanatométhyl)-1,7-heptyl diisocyanate.

Quand le au moins un composé sélectionné polymérisable est de type silane, il est plus particulièrement choisi parmi les composés suivants: aminopropyle triméthoxysilane, vinyle triméthoxysilane, méthacryloxy triméthoxysilane, glycidoxypropyletriméthoxysilane, mercaptopropyle triméthoxysilane, (N-2aminoethyle)aminopropyletriméthoxy silane, tétraéthoxysilane.

### Polymérisation par l'oxygène ambiant :

Quand, selon l'invention, l'agent de déclenchement de la polymérisation sollicité est l'oxygène ambiant, la composition micro-encapsulée est formée d'au moins un composé polymérisable sélectionné dont la polymérisation est spontanée en présence dudit agent de déclenchement de la polymérisation. Ce composé est choisi dans le groupe constitué par les huiles siccatives ou semi-siccatives, composés d'esters glycériques d'acides gras linéaires variés, saturés, mono et polyinsaturés, ces composés d'esters glycériques ayant la propriété, sous l'effet de l'oxygène de l'air de réagir en donnant une structure macromoléculaire tridimensionnelle.

Les huiles siccatives ou semi-siccatives, mises en oeuvre dans le cadre de l'invention sont préférentiellement choisies dans le groupe constitué par l'huile de lin, de périlla, de stillingia, de noix, d'aleurite, d'oiticica, d'isano, de ricin déshydratée, de caméline, de carthame, de coton, d'oeillette, de pépins de raisins, de soja, de tournesol.

Toutes ces huiles peuvent être mises en oeuvre seules ou en mélange.

La composition polymérisable fluante selon l'invention d'autoréparation de dégradations subies par des matériaux dans leur environnement d'exploitation, au fur et à mesure que ces dégradations se produisent, est encapsulée dans des microcapsules dont les parois sont étanches aux composés de ladite composition mais également aux rayons ultra-violets, à l'humidité relative ambiante et à l'oxygène ambiant.

Quand un initiateur de polymérisation par rayonnement ultra-violet tel qu'un photo-amorceur radicalaire ou cationique s'impose, cet initiateur de polymérisation est micro-encapsulé, sous la forme d'un mélange, avec la composition polymérisable fluante dans la même microcapsule.

La micro-encapsulation de la composition polymérisable selon l'invention, seule ou en mélange avec un initiateur de polymérisation, s'effectue selon des procédés connus, tels que par exemple le procédé de polycondensation interfaciale, le procédé sol-gel, le procédé en lit fluidisé, le procédé utilisant les fluides super critiques, ou autres, au moyen de composés connus pour former la membrane des microcapsules.

Tant que la composition polymérisable fluante d'autoréparation est micro-encapsulée, elle reste protégée de l'agent de déclenchement de la polymérisation. Mais dès lors qu'une au moins des microcapsules contenant la composition polymérisable est rompue sous une action quelconque, la composition polymérisable d'autoréparation est libérée et polymérise spontanément en présence dudit agent de déclenchement de la polymérisation naturellement présent dans l'environnement d'exploitation desdites microcapsules, ledit agent de déclenchement étant choisi parmi le rayonnement ultraviolet ou l'humidité de l'air ambiant ou l'oxygène de l'air..

Les microcapsules contenant la composition polymérisable d'autoréparation selon l'invention, seule ou en mélange avec un initiateur de polymérisation radicalaire ou cationique, ont des dimensions diamétrales, c'est-à-dire assimilées à un diamètre, comprises dans l'intervalle allant de 0,1 µm à 500 µm mais préférentiellement comprise dans l'intervalle allant de 0,5 µm à 20 µm.

L'invention concerne également des matériaux organiques auto-réparants en particulier des polymères, des matériaux inorganiques auto-réparants, des matériaux composites auto-réparants, rendus auto-réparant par l'incorporation dans leur masse des seules microcapsules frangibles de la composition polymérisable fluante d'autoréparation ou par revêtement de leurs surfaces externes par lesdites microcapsules de la composition polymérisable d'autoréparation selon l'invention et ce, en l'absence de catalyseur de polymérisation.

Selon l'invention, l'intégration dans les matériaux pour les rendre auto-réparants, des microcapsules frangibles de la composition polymérisable fluante d'autoréparation, peut se faire par l'une et/ou l'autre méthode consistant :
▪ à incorporer dans la masse desdits matériaux une multiplicité de microcapsules contenant ladite composition polymérisable fluante au moment de la formation de la masse desdits matériaux et/ou
▪ à revêtir la surface externe desdits matériaux d'un film contenant les microcapsules de la composition polymérisable fluante, tel que par exemple : un film sol-gel contenant lesdites microcapsules.

Ainsi, les matériaux organiques, en particulier les polymères, les matériaux inorganiques et les matériaux composites, subissant des dégradations dans leur environnement d'exploitation, sont rendus auto-réparant par la composition polymérisable auto-réparante micro-encapsulée selon l'invention intégrée dans lesdits matériaux, puisque la polymérisation de ladite composition se produit spontanément, en l'absence de catalyseur, des lors que libérée des microcapsules, elle est en présence de l'agent de déclenchement approprié, naturellement présent dans l'environnement d'exploitation, ledit agent de déclenchement étant choisi parmi le rayonnement ultraviolet ou l'humidité de l'air ambiant ou l'oxygène de l'air..

Le choix de la composition polymérisable auto-réparante micro-encapsulée à intégrer aux matériaux à rendre autoréparables selon l'invention, se fait à travers la capacité de ladite composition, choisie et formulée à partir de composés issus des groupes de composés précédemment décrits, à être d'une part en affinité avec la composition de chaque matériau à rendre autoréparable, et d'autre part dépendante de l'agent de déclenchement de la polymérisation à exploiter parmi les trois possibles dans l'environnement dudit matériau, c'est-à-dire le rayonnement ultra-violet, l'humidité relative et l'oxygène. Dès lors, un seul type de composition polymérisable auto-réparante micro-encapsulée répondant à l'un des trois agents de déclenchement de la polymérisation est intégré, à un matériau à rendre autoréparable. Mais il est également possible selon l'invention d'intégrer, simultanément au matériau à rendre autoréparable, jusqu'à trois types de compositions polymérisables auto-réparantes micro-encapsulées séparément, chaque type de compositions, voire les trois types de compositions polymérisant spontanément en présence de l'agent de déclenchement qui lui est propre, c'est-à-dire le rayonnement UV, l'humidité relative et l'oxygène.

Dès lors et selon l'invention, un procédé d'autoréparation des matériaux devient remarquable du fait de l'intégration à un matériau organique, inorganique ou composite, des microcapsules renfermant l'intégralité d'au moins une composition polymérisable auto-réparante formée par au moins un composé polymérisable fluant et éventuellement un initiateur de polymérisation en mélange avec la composition dans les mêmes capsules, ladite composition étant adaptée audit matériau et sa polymérisation se produisant spontanément en présence de l'agent de déclenchement naturellement présent dans l'environnement, de sorte que, dès qu'une dégradation apparaît dans le matériau, par exemple, la formation d'une fissure, il y a pour conséquence, la rupture des microcapsules situées à l'emplacement de cette dégradation et la libération de la composition d'autoréparation fluante qui remplit ladite dégradation par capillarité, y polymérise et la comble en l'absence de catalyseur.

Ainsi, le procédé d'autoréparation d'un matériau organique ou inorganique, en particulier un matériau polymère se caractérise en ce que l'on incorpore, dans ledit matériau, une pluralité de microcapsules frangibles contenant au moins une composition polymérisable d'autoréparation constituée par au moins un composé polymérisable liquide ou fluant dont la polymérisation se produit spontanément, en présence d'un agent de déclenchement de sa polymérisation naturellement présent dans l'environnement, choisi parmi le rayonnement ultraviolet ou l'humidité de l'air ambiant ou l'oxygène, et ce en l'absence de catalyseur, de sorte que la formation, par exemple, d'une fissure dans le matériau a pour conséquence de rompre les microcapsules situées à l'emplacement de la fissure et de libérer la composition d'autoréparation fluante qui remplit ladite fissure par capillarité, la polymérisation s'opérant alors spontanément sous l'action dudit agent de déclenchement naturellement présent dans l'environnement, c'est-à-dire les rayonnements ultraviolet, l'humidité ambiante et l'oxygène.

L'invention peut être appliquée à la réalisation de matériaux organiques, inorganiques ou composites auto-réparants destinés à la réalisation d'objets et appareils divers appartenant à des domaines d'activités variées, tels que par exemple : aérospatial, véhicules de transport terrestre, constructions navales, carrosseries et pièces constitutives d'appareils et machines utilisables à des fins professionnelles ou domestiques, composants électroniques et autres.

L'invention sera mieux comprise grâce à la description d'exemples illustratifs non limitatifs.

### Exemple 1 : encapsulation d'un monomère acrylique : le triméthylolpropane triacrylate (TMPTA) par le procédé sol-gel

- la paroi des microcapsules a été préparée dans un système de microémulsion précurseur composé d'un monomère dans l'eau (émulsion H/E) en milieu basique (NH₄ OH 16%), par réaction d'hydrolyse-condensation entre les précurseurs tétraéthylortosilicate (TEOS) et le 3-(triméthoxysilyl)propylméthacrylate (MPTS) dans l'éthanol, à température ambiante pendant 2 h.

La composition polymérisable d'autoréparation à micro-encapsuler est formée du monomère triméthylolpropane triacrylate (TMPTA) et d'un photo-amorceur (DAROCUR 1173) en mélange.

### Mode opératoire : pratiqué dans cet exemple :

Dans un ballon, on place successivement les composés susceptibles de former la paroi des microcapsules, à savoir : 1g de MPTS, 1g de TEOS puis 1g de TMPTA, 0,05 g du photoamorceur Darocur 1173 constituant l'agent autoréparant et 4g d'éthanol. La solution est soumise à une agitation magnétique (500-1000 tr/mn). On ajoute ensuite, goutte-à-goutte, 1,75 ml d'une solution aqueuse d'ammoniaque (16 % en poids), puis 10g d'une solution aqueuse d'un tensioactif (Igepal) à 1% en poids. La solution devient blanche et on observe la formation de particules. Le mélange est agité à température ambiante pendant quelques heures. On filtre alors sous vide pour recueillir les particules qui sont ensuite lavées par un mélange éthanol/eau (50/50). Les particules sont ensuite séchées.

La morphologie des particules a été étudiée par Microscopie Electron à Balayage (MEB). Les microcapsules obtenues présentent un diamètre compris entre 1 et 20 µm, et ont une forme sphérique.

Sous l'effet d'un choc, ces microcapsules se brisent et se vident et le monomère libéré s'écoule dans une fissure s'y polymérise spontanément sous irradiation UV (200-450 nm, 120 W/cm) ou sous exposition solaire, pour donner un polymère qui a été caractérisé.

Les microcapsules sont à intégrer à un matériau pour le rendre autoréparable.

### Exemple 2 : Encapsulation d'un monomère acrylique : le triméthylolpropane triacrylate(TMPTA) par polycondensation interfaciale

- la paroi des microcapsules est formée d'hexaméthylène diisocyanate (HMDI) et d'éthylène diamine
- la composition polymérisable d'autoréparation à micro-encapsuler est formée du monomère triméthylolpropane triacrylate (TMPTA) et d'un photo-amorceur (DAROCUR 1173) en mélange.

### Mode opératoire : pratiqué dans cet exemple :

On place dans un ballon 100 ml d'eau et 3 g d'alcool polyvinylique (tensio actif), puis on maintient la solution sous une agitation mécanique de 300 tr/mn.

On ajoute ensuite 5 g de monomère TMPTA et 0,05g d'un photo-amorceur (Darocur 1173) dont le mélange constitue la composition polymérisable d'autoréparation et 2g d'hexaméthylène diisocyanate (HMDI) ou monomère 1 intervenant dans la formation des microcapsules. Il se forme sous agitation une émulsion huile dans eau. On rajoute alors 2g d'éthylène diamine ou monomère 2 réagissant avec le monomère 1 et on maintient le mélange à température ambiante pendant plusieurs heures jusqu'à stabilisation du pH. Le monomère 1 et le monomère 2 réagissent à l'interface pour former la paroi en polyurée des capsules chargées de la composition polymérisable autoréparante. On filtre alors les microcapsules, puis on les lave par une solution éthanol-eau (50/50). On sèche les microcapsules de polyurée chargées du monomère TMPTA et du photo-amorceur.

Sous l'impact d'un choc, les microcapsules se brisent et le monomère TMPTA est libéré, remplit une fissure et polymérise spontanément sous irradiation UV (exposition solaire) grâce au photo-amorceur (Darocur 1173) en rebouchant la fissure.

Les microcapsules sont à intégrer à un matériau pour le rendre autoréparable.

### Exemple 3 : Encapsulation du 1,6 hexaméthylène diisocyanate (HMDI) par procédé sol-gel

Des microcapsules de silice ont été préparées dans un système de microémulsion précurseur-monomère dans l'eau (Emulsion H/E) en milieu acide (HCl 1M).
- la paroi des microcapsules est formée par réaction entre les précurseurs TEOS et MPTS (voir exemple 1).
- la composition polymérisable d'autoréparation à micro-encapsuler est formée du monomère 1,6 hexaméthylène diisocyanate (HMDI).

### Mode opératoire : pratiqué dans cet exemple :

La membrane des microcapsules constituée de silice a été obtenue par la réaction d'hydrolyse-condensation entre les précurseurs (TEOS et MPTS), à température ambiante pendant 1h. 0.75g de 1,6 hexaméthylène diisocyanate (HMDI : monomère) a été mélangé avec les précurseurs de silice (1g de TEOS et 1g de MPTS). Ensuite 1ml d'une solution aqueuse d'acide chlorhydrique a été alors ajoutée goutte à goutte au mélange (pH = 2). L'ensemble a été remué à température ambiante pendant environ 10 minutes. Ce mélange a été homogénéisé afin de former une émulsion huile dans l'eau (H/E) dans 10 ml d'une solution d'Igepal (NP12) (1%). la solution dispersante est agitée à l'aide d'un agitateur magnétique pendant environ 1 h à température ambiante.

Sous l'impact d'un choc ou autre cause entraînant la rupture de la microcapsule, le monomère HMDI est libéré et polymérise en présence de l'humidité de l'air ambiant en rebouchant la fissure dans laquelle il s'est écoulé.

Les microcapsules sont à intégrer à un matériau pour le rendre autoréparable.

### Exemple 4 : Encapsulation du 1,6 hexaméthylène diisocyanate (HMDI) par polycondensation interfaciale.

- la paroi des microcapsules est formée par réaction entre du 1,6 hexaméthylène diisocyanate (HMDI) (monomère 1) et un mélange d'amines secondaires et tertiaires (monomère 2).
- la composition polymérisable d'autoréparation à micro-encapsuler est formée de 1,6 hexaméthylène diisocyanate (HMDI).

### Mode opératoire : pratiqué dans cet exemple :

100 ml d'eau et 3 g d'alcool polyvinylique (tensioactif, 3%) sont mélangés dans un réacteur. Après la dissolution du tensioactif, 8g de 1,6 Héxaméthylène diisocyanate (HMDI) sont ajoutés sous agitation mécanique (500 tr/mn), à la phase aqueuse. Le HMDI en excès constitue en même temps l'agent autoréparant et le monomère 1 de la paroi. Au bout de 10 mn, après stabilisation de l'émulsion, 1g d'un mélange de 0,4g d'éthylène diamine et 0,6 g de Jeffamine T 403, est incorporé à l'émulsion. Ce mélange d'amines secondaires et tertiaires représente le monomère 2 qui par réaction avec le monomère 1 conduit à la formation de microcapsules de polyurée chargées en agent auto-réparant. Puis, les microparticules sont filtrées et lavées avec un mélange eau/alcool (50/50 V/V).

Sous l'impact d'un choc ou une autre cause provoquant la rupture des microcapsules, le monomère polymérisable (HMDI) est libéré et polymérise en présence de l'humidité de l'air ambiant en rebouchant la fissure dans laquelle il s'est écoulé.

Les microcapsules sont à intégrer à un matériau pour le rendre autoréparable.

### Exemple 5 : Encapsulation d'un composé silane (tétraéthoxysilane) par polycondensation interfaciale.

- la paroi des microcapsules est formée par la réaction du 2,4-tolylènediisocyanate (TDI) (monomère 1) et de la 1,3 phénylènediamine (monomère 2).
- la composition polymérisable d'autoréparation à micro-encapsuler est formée du monomère tétraéthoxysilane.

Les composés silanes s'hydrolysent en silanols qui peuvent alors se condenser entre eux et former des liaisons siloxanes (silicones). Cette réaction chimique entre le composé silane et l'eau est exploitée pour permettre une autoréparation par libération d'un silane encapsulé exposé à l'humidité. Le silicone forme un film autoréparant.

### Mode opératoire : pratiqué dans cet exemple :

Dans un réacteur de 100 ml, 3g de tensioactif (alcool polyvinylique) sont mélangés par agitation mécanique (500 tr/min.) à 100 ml d'eau déminéralisée (milieu dispersant). Après dissolution, un mélange constitué de 8g de tétraéthoxysilane (agent autoréparant) et de 1g de 2,4-tolylènediisocyanate (monomère 1) est ajouté. Après stabilisation de l'émulsion (10 minutes environ), 1g de 1,3 phénylènediamine (monomère 2) est ajouté à l'émulsion. La réaction est alors poursuivie pendant environ 30 minutes. Les microcapsules sont alors filtrées, lavées et séchées.

Sous l'impact d'un choc ou autre cause provoquant la rupture des microcapsules, le monomère polymérisable (tétraéthoxysilane) est libéré, s'hydrolyse au contact de l'humidité atmosphérique, se condense et forme des liaisons siloxanes qui donnent un film silicone obstruant une fissure.

Les microcapsules sont à intégrer à un matériau pour le rendre autoréparable.

### Exemple 6 : Encapsulation d'une résine siccative (huile de lin) par procédé sol-gel

- la paroi des microcapsules est formée de MPTS et de TEOS (définition dans l'exemple 1).
- la composition polymérisable d'autoréparation à micro-encapsuler est formée par de l'huile de lin.

### Mode opératoire : pratiqué dans cet exemple :

Dans un ballon, on place successivement les réactifs susceptibles de former la paroi des microcapsules tels que 1g de MPTS, 1g de TEOS puis 0,75g d'huile de lin constituant l'agent autoréparant, et 4g d'éthanol. La solution est soumise à une agitation magnétique (500-1000 tr/min). On ajoute ensuite goutte-à-goutte 1,75 ml d'une solution aqueuse d'ammoniaque (16 % en poids), puis 10 g d'une solution aqueuse d'un tensioactif (Igepal) à 1% en poids. La solution devient blanche et on observe la formation de particules. Le mélange est agité à température ambiante pendant 2 heures. On filtre alors sous vide pour recueillir les microcapsules qui sont ensuite lavées par un mélange eau/éthanol (50/50) puis séchées.

Sous l'impact d'un choc ou autre cause provoquant la rupture des microcapsules, l'huile de lin est libérée, s'écoule dans une fissure et forme un film de rebouchage par réaction avec l'oxygène de l'air ambiant.

Les microcapsules sont à intégrer à un matériau pour le rendre autoréparable.

### Exemple 7 : Encapsulation d'une résine siccative (huile de lin) par polycondensation interfaciale

- la paroi des microcapsules est formée de 2,4-toluène diisocyanate (monomère 1) et de 1,3-phénylène diamine (monomère 2).
- La composition polymérisable d'autoréparation est l'huile de lin.

### Mode opératoire : pratiqué dans cet exemple :

100 ml d'eau et 3g d'alcool polyvinylique (tensioactif, 3%) sont mélangés dans un réacteur de 100 ml. Après la dissolution du tensioactif, un mélange de 1g de 2,4-toluène diisocyanate (monomère 1), 15g d'une résine siccative comme l'huile de lin et 0.45g de siccatif constituants l'agent autoréparant sont ajoutés, sous agitation mécanique (500 tr/mn) et sous atmosphère d'azote, à la phase aqueuse. Au bout de 10 mn, après stabilisation de l'émulsion, 1g de 1,3-phénylène diamine (monomère 2) dissout dans 10 ml d'eau est incorporé à l'émulsion conduisant à la formation de microcapsules de polyurée par condensation entre le monomère 1 et le monomère 2.

Par la suite, les microparticules sont filtrées et lavées avec un mélange eau/alcool (50/50 V/V). Après séchage ces capsules seront incorporées dans un matériau composite tel que polyamide, polysiloxane....

Sous l'impact d'un choc provoquant la rupture des microcapsules, l'huile de lin est libérée, s'écoule dans une fissure et forme un film de rebouchage par réaction avec l'oxygène de l'air ambiant.

Les microcapsules sont à intégrer à un matériau pour le rendre autoréparable.

## Revendications

1. Matériau auto-réparant, comportant dans sa masse ou en surface, une pluralité de microcapsules frangibles contenant une composition d'autoréparation constituée d'au moins un composé polymérisable fluant, et éventuellement un photo-amorceur en mélange dans ladite composition, **caractérisé en ce que** la polymérisation du au moins un composé polymérisable fluant se produit spontanément en présence d'un agent de déclenchement externe audit matériau et naturellement présent dans l'environnement d'exploitation dudit matériau choisi parmi le rayonnement ultraviolet ou l'humidité de l'air ambiant ou l'oxygène de l'air, ledit matériau ne comportant pas de catalyseur pour ladite polymérisation.

2. Matériau auto-réparant selon la revendication 1 **caractérisé en ce que** les microcapsules incorporées audit matériau contiennent une composition polymérisable d'autoréparation fluante pour auto-réparer des dégradations subies telles que fissures, fentes, craquelures ou autres, au fur et à mesure qu'elles se produisent dans leur environnement d'exploitation, ledit au moins un composé sélectionné polymérisable étant de préférence un monomère et/ou un oligomère et/ou un prépolymère.

3. Matériau auto-réparant selon l'une au moins des revendications 1 ou 2 **caractérisé en ce que**, dans le cas où l'agent de déclenchement de la polymérisation naturellement présent dans l'environnement est le rayonnement ultra-violet, le au moins un composé polymérisable est choisi
(a) dans le groupe constitué par les monomères et/ou les oligomères et/ou les prépolymères de type acrylique et/ou méthacrylique répondant à la formule (I) : 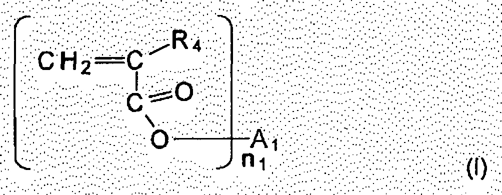 dans laquelle
▪ R₄ est l'hydrogène ou un méthyl,
▪ A₁ est un reste organique,
▪ n₁ est un nombre entier de 1 à 6 limites incluses ;
(b) ou dans le groupe constitué par les monomères et/ou les oligomères et/ou les prépolymères de type époxy, mono, di ou tri fonctionnel, répondant à la formule générale (II) : 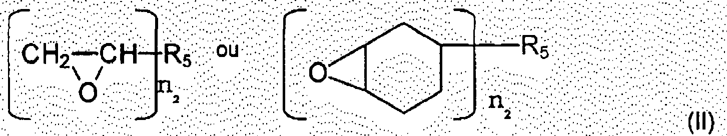 dans laquelle
n₂ est un nombre entier de 1 à 3, et
R₅ est un reste d'un radical organique ;
(c) ou dans le groupe constitué par les monomères et/ou les oligomères et/ou les prépolymères de type vinyl-éther, ces composés répondant à la formule générale (III) suivante : 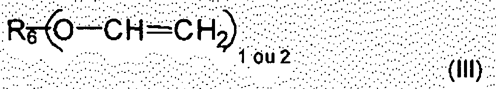 dans laquelle R₆ est un reste d'un dérivé organique.

4. Matériau auto-réparant selon l'une au moins des revendications 1 à 3 **caractérisé en ce que**, quand le au moins un composé polymérisable est de type acrylique et/ou méthacrylique, un photo-amorceur radicalaire est associé en mélange à ladite composition, avant encapsulation, le mélange formé étant micro-encapsulé, ledit photo-amorceur radicalaire étant choisi de préférence dans le groupe constitué par le : 1-hydroxy-cyclohexyl-phényl-cétone, benzophénone, 2-hydroxy-2-méthyl- 1-phényl-1-propanone, méthylbenzoylformate, α,α-diméthoxy-α-phénylacétophénone, 2-benzyl-2-(diméthylamino)-1-[4-(4-morpholinyl)phényl]-1-butanone, 2-méthyl-1-[4-(méthylthio)phériyl]-2-(4-morpholinyl)-1-propanone, diphényl (2,4,6-triméthylbenzoyl)-phosphine oxyde, phosphine oxyde, phényl bis (2,4,6-triméthyl benzoyle)-phosphine oxyde, phosphine oxyde, phényl bis(2,4,6-triméthyl benzoyle), bis (éta 5-2,4-cyclopentadien-1-yl)bis[2,6-difluoro-3-(1H-pyrrol-1-yl)phényle]titanium.

5. Matériau auto-réparant selon l'une au moins des revendications 1 à 4 **caractérisé en ce que** les concentrations en composés polymérisables de la composition polymérisable d'autoréparation par rayonnement UV exprimées en % en poids, sont les suivants :
▪ 90 à 99%, de préférence 95 à 99%, de dits composés polymérisables,
▪ 1 à 10% de dits photo-amorceurs, de préférence de 1% à 5%.

6. Matériau auto-réparant selon l'une au moins des revendications 1 ou 2 **caractérisé en ce que** dans le cas où l'agent de déclenchement de la polymérisation naturellement présent dans l'environnement est l'humidité relative ambiante, le au moins un composé polymérisable sélectionné est choisi dans le groupe constitué par les monomères et/ou les oligomères et/ou les prépolymères de type :
(a) cyanoacrylate mono ou plurifonctionnel de formule IV : 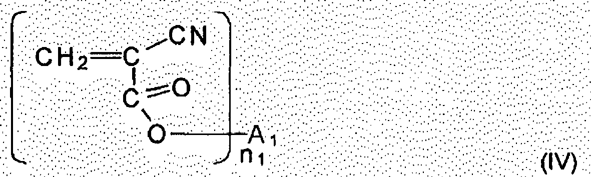 dans laquelle :
A₁ est un reste organique,
n₁ est un nombre entier de 1 à 6, et de préférence un cyanoacrylate choisi parmi les composés suivants : cyanoacrylate de méthyle, cyanoacrylate d'éthyle, 3,3'-(1,4-phénylène)bis(2-cyanoacrylate) de diéthyle , 3-(3-chloro-4-méthoxyphényl)-2-cyanoacrylate d'éthyle, 2-cyanoacrylate d'éthyle, 3-(5-(2-chloro-5-(trifluorométhyl)phényle)-2-furyl)-2-cyanoacrylate d'éthyle, 3-(5-(2-chlorophényl)-2-furyl)-2-cyanoacrylate d'éthyle, 3-(5-(3-chlorophényl)-2-furyl)-2-cyanoacrylate d'éthyle, 3-(5-(4-chlorophényl)-2-furyl)-2-cyanoacrylate d'éthyle, 3-(5-bromo-2-furyl)-2-cyanoacrylate, 3-(5-(4-(aminosulfonyl)phényl)-2-furyl)-2-cyanoacrylate ;
ou de type
(b) isocyanate plurifonctionnel de formule IV :
O=C=N-R-N=C=O (V)
dans laquelle R est un groupement organique aromatique ou aliphatique pouvant contenir des fonctions isocyanate ou autres,
et de préférence un isocyanate choisi parmi les composés suivants : 1,6 hexaméthylène diisocyanate, méthylène diphényle diisocyanate, toluène-2,4-diisocyanate, toluène-2,6-diisocyanate, isophorone diisocyanate, naphtylène-1,5 diisocyanate, para-xylylène diisocyanate, m-tétraméthylxylèrie diisocyanate, méta-xylylène diisocyanate, dicyclohexylméthane4,4'-diisocyanate, triphénylméthane triisocyanate, 1, 6, 11-undécane triisocyanate, 2,2-bis (isocyanatométhyl) propyl isocyanate, 4-(isocyanatométhyl)-1,7-heptyl diisocyanate.

7. Matériau auto-réparant selon l'une au moins des revendications 1 ou 2 **caractérisé en ce que**, dans le cas où l'agent de déclenchement de la polymérisation naturellement présent dans l'environnement sollicité est l'humidité relative ambiante, le au moins un composé polymérisable sélectionné est choisi dans le groupe constitué par les monomères et/ou les oligomères et/ou les prépolymères de type silane de formule (VI) :
XₙSi(OR)₄₋ₙ (VI)
dans laquelle :
- n est égal à 0 ou 1
- X est un groupe fonctionnel choisi pour sa compatibilité avec la résine dont le silane doit améliorer l'adhérence, tel qu'un groupe vinyle, acryle, amino, mercapto ou époxy,
et de préférence choisi parmi les composés suivants : aminopropyle triméthoxysilane, vinyle triméthoxysilane, méthacryloxy triméthoxysilane, glycidoxypropyle-triméthoxysilane, mercaptopropyle triméthoxysilane, (N-2aminoethyle)-aminopropyletriméthoxy-silane, tétraéthoxysilane.

8. Matériau auto-réparant selon l'une au moins des revendications 1 ou 2 **caractérisé en ce que**, dans le cas où l'agent de déclenchement de la polymérisation naturellement présent dans l'environnement est l'oxygène ambiant, le au moins un composé polymérisable est choisi dans le groupe constitué par les huiles siccatives ou semi-siccatives, composés d'esters glycériques d'acides gras linéaires variés, saturés, mono et polyinsaturés, et de préférence choisi dans le groupe constitué par l'huile de lin, de périlla, de stillingia, de noix, d'aleurite, d'oiticica, d'isano, de ricin déshydratée, de caméline, de carthame, de coton, d'oeillette, de pépins de raisins, de soja, de tournesol.

9. Matériau auto-réparant selon l'une au moins des revendications 1 à 8 **caractérisé en ce que** les microcapsules contenant ladite composition polymérisable, seule ou en mélange avec un initiateur de polymérisation radicalaire ou cationique, ont des dimensions diamétrales, comprises dans l'intervalle allant de 0,1 µm à 500 µm mais préférentiellement comprises dans l'intervalle allant de 0,5 µm à 20 µm.

10. Matériau auto-réparant selon l'une au moins des revendications 1 à 9 **caractérisé en ce qu'**il comporte dans sa masse ou en surface une pluralité de trois types de compositions polymérisables d'autoréparation micro-encapsulées, chaque type de compositions polymérisant spontanément et sélectivement en présence d'un agent de déclenchement externe audit matériau et naturellement présent dans l'environnement dudit matériau, choisi parmi le rayonnement ultraviolet UV, l'humidité de l'air ambiant et l'oxygène de l'air.

11. Procédé d'autoréparation d'un matériau organique, en particulier d'un matériau polymère, ou d'un matériau inorganique ou d'un matériau composite, **caractérisé en ce que** l'on intègre dans ledit matériau à auto-réparer, une pluralité de microcapsules frangibles, contenant au moins une composition d'autoréparation constituée par au moins un composé polymérisable fluant dont la polymérisation se produit spontanément, en présence d'un agent de déclenchement externe audit matériau et naturellement présent dans l'environnement dudit matériau, choisi parmi le rayonnement ultraviolet, ou l'humidité de l'air ambiant l'ou oxygène de l'air, ledit matériau ne comportant pas de catalyseur pour ladite polymérisation, de sorte que la formation d'une fissure dans lesdits matériaux a pour conséquence de rompre les microcapsules situées à l'emplacement de la fissure et de libérer la composition polymérisable d'autoréparation fluante qui la remplit par capillarité et y polymérise spontanément en présence dudit agent de déclenchement.

12. Procédé d'autoréparation d'un matériau organique, en particulier d'un matériau polymère, d'un matériau inorganique ou d'un matériau composite selon la revendication 11, **caractérisé en ce que** les microcapsules renfermant la composition d'autoréparation sont incorporées dans la masse dudit matériau, lors de sa mise en forme, ou dans un film de polymère, recouvrant en surface ledit matériau lors de sa mise en forme.

13. Utilisation du procédé d'autoréparation selon l'une au moins des revendications 11 ou 12 pour la réalisation de matériaux organiques, inorganiques ou composites auto-réparants destinés à la réalisation d'objets et appareils divers appartenant à des domaines d'activités variées, tels que par exemple : véhicules de transport terrestre, constructions navales, carrosseries et pièces constitutives d'appareils et machines utilisables à des fins professionnelles ou domestiques, composants électroniques et autres.

14. Utilisation du procédé d'autoréparation selon l'une au moins des revendications 11 ou 12 pour la réalisation d'objets destinés au domaine de l'aérospatial.

15. Composition polymérisable d'autoréparation micro-encapsulée constituée par au moins un composé sélectionné polymérisable à intégrer dans des matériaux organiques, inorganiques, composites pour auto-réparer des dégradations subies telles que fissures, fentes, craquelures ou autres, au fur et à mesure qu'elles se produisent dans leur environnement d'exploitation, ledit au moins un composé sélectionné polymérisable étant de préférence un monomère et/ou un oligomère et/ou un prépolymère, ladite composition étant **caractérisée en ce qu'**une fois libérée des microcapsules, polymérise spontanément en présence de l'oxygène ambiant en tant qu'agent de déclenchement externe aux matériaux à auto-restaurer mais naturellement présent dans l'environnement d'exploitation desdits matériaux, ledit au moins un composé polymérisable étant choisi dans le groupe constitué par les huiles siccatives ou semi-siccatives, composés d'esters glycériques d'acides gras linéaires variés, saturés, mono et polyinsaturés, et de préférence choisi dans le groupe constitué par l'huile de lin, de périlla, de stillingia, de noix, d'aleurite, d'oiticica, d'isano, de ricin déshydratée, de caméline, de carthame, de coton, d'oeillette, de pépins de raisins, de soja, de tournesol.

## Patentansprüche

1. Selbstreparierendes Material, umfassend in seiner Masse oder auf seiner Oberfläche eine Vielzahl von zerbrechbaren Mikrokapseln, umfassend eine Selbstreparaturzusammensetzung, die aus mindestens einer flüssigen polymerisierbaren Verbindung besteht, und eventuell einen Photoinitiator in Mischung in der Zusammensetzung, **dadurch gekennzeichnet, dass** die Polymerisation der mindestens einen flüssigen polymerisierbaren Verbindung in Anwesenheit eines Auslösemittels, das außerhalb des Materials liegt und in der Betriebsumgebung des Materials natürlich vorhanden ist, ausgewählt aus der Ultraviolettstrahlung oder der Feuchtigkeit der Umgebungsluft oder des Sauerstoffs der Luft, spontan erfolgt, wobei das Material für die Polymerisation keinen Katalysator umfasst.

2. Selbstreparierendes Material nach Anspruch 1, **dadurch gekennzeichnet, dass** die in das Material aufgenommenen Mikrokapseln eine flüssige polymerisierbare Zusammensetzung zur Selbstreparatur enthalten, um Beschädigungen wie z.B. Spalten, Schlitze, Risse oder dergleichen selbst zu reparieren, wenn diese sich in ihrer Betriebsumgebung ergeben, wobei die mindestens eine ausgewählte polymerisierbare Verbindung vorzugsweise ein Monomer und/oder ein Oligomer und/oder ein Präpolymer ist,

3. Selbstreparierendes Material nach mindestens einem der Ansprüche 1 oder 2, **dadurch gekennzeichnet, dass**, für den Fall, dass das Auslösemittel der Polymerisation, das natürlich in der Umgebung vorkommt, die Ultraviolettstrahlung ist, die mindestens eine polymerisierbare Verbindung ausgewählt ist aus:
(a) der Gruppe bestehend aus den Monomeren und/oder den Oligomeren und/oder den Präpolymeren des Typs Acryl oder Methacryl, die der folgenden Formel (I) entspricht: 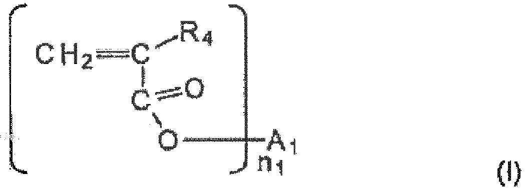 wobei
- R₄ der Wasserstoff oder ein Methyl ist,
- A₁ ein organischer Rest ist,
- n₁ eine ganze Zahl von 1 bis 6 ist, beide eingeschlossen;
(b) oder der Gruppe bestehend aus den Monomeren und/oder den Oligomeren und/oder den Präpolymeren des Typs epoxy-, mono-, di- oder trifunktional, die der folgenden allgemeinen Formel (II) entspricht: 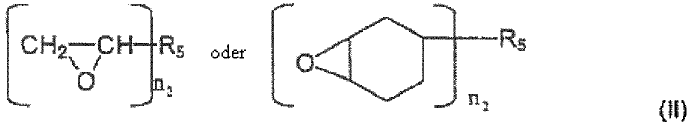
wobei n₂ eine ganze Zahl von 1 bis 3 ist, und
R₅ ein Rest eines organischen Radikals ist;
(c) oder der Gruppe bestehend aus den Monomeren und/oder den Oligomeren und/oder den Präpolymeren des Typs Vinylether, wobei diese Verbindungen der folgenden allgemeinen Formel (III) entsprechen:
R₆-(O-CH=CH₂)_{1 oder 2} (III)
wobei R₆ ein Rest eines organischen Derivats ist.

4. Selbstreparierendes Material nach mindestens einem der Ansprüche 1 bis 3, **dadurch gekennzeichnet, dass**, wenn die mindestens eine polymerisierbare Verbindung des Typs Acryl und/oder Methacryl ist, ein radikalischer Photoinitiator in Mischung mit der Zusammensetzung vor der Einkapselung assoziiert ist, wobei die gebildete Mischung mikroverkapselt ist, wobei der radikalische Photoinitiator vorzugsweise ausgewählt ist aus der Gruppe bestehend aus: 1-Hydroxy-cyclohexyl-phenyl-keton, Benzophenon, 2-Hydroxy-2-methyl-1-phenyl-1-propanon, Methylbenzoylformat, α,α-Dimethoxy-α-phenylacetophenon, 2-Benzyl-2-(dimethylamino)-1-[4-(4-morpholinyl)phenyl]-1-butanon, 2-methyl-1-[4-(methylthio)phenyl]-2-(4-morpholinyl)-1-propanon, Diphenyl (2,4,6-trimethylbenzoyl)-phosphinoxid, Phosphinoxid, Phenyl bis (2,4,6-trimethylbenzoyl)-phosphinoxid, Phosphinoxid, Phenyl bis(2,4,6-trimethyl benzoyl), bis (eta 5-2,4-Cyclopentadien-1-yl)bis[2,6-difluoro-3-(1H-pyrrol-1-yl)phenyl]titan.

5. Selbstreparierendes Material nach mindestens einem der Ansprüche 1 bis 4, **dadurch gekennzeichnet, dass** die Konzentrationen an polymerisierbaren Verbindungen der polymerisierbaren Selbstreparaturzusammensetzung durch UV-Strahlung, ausgedrückt in Gew.%, die folgenden sind:
- 90 bis 99%, vorzugsweise 95 bis 99% der polymerisierbaren Verbindungen,
- 1 bis 10% der Photoinitiatoren, vorzugsweise 1% bis 5%.

6. Selbstreparierendes Material nach mindestens einem der Ansprüche 1 oder 2, **dadurch gekennzeichnet, dass**, für den Fall, dass das Auslösemittel der Polymerisation, das natürlich in der Umgebung vorhanden ist, die relative Umgebungsfeuchtigkeit ist, die mindestens eine ausgewählte polymerisierbare Verbindung gewählt ist aus der Gruppe bestehend aus den Monomeren und/oder den Oligomeren und/oder den Präpolymeren des folgenden Typs:
(a) Cyanoacrylat, mono- oder mehrfunktional mit der Formel IV: 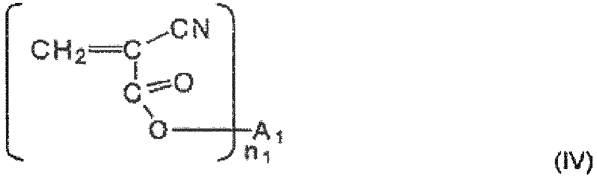 wobei:
A₁ ein organischer Rest ist,
n₁ eine ganze Zahl von 1 bis 6 ist,
und vorzugsweise ein Cyanoacrylat, ausgewählt aus den folgenden Verbindungen:
Methylcyanoacrylat, Ethylcyanoacrylat, Diethyl-3,3'-(1,4-Phenylen)bis(2-cyanoacrylat), 3-(3-Chloro-4-methoxyphenyl)-2-ethylcyanoacrylat, 2-Ethylcyanoacrylat, 3-(5-(2-Chloro-5-(trifluormethyl)phenyl)-2-furyl)-2-ethylcyanoacrylat, 3-(5-(2-Chlorphenyl)-2-furyl)-2-ethylcyanoacrylat, 3-(5-(3-Chlorphenyl)-2-furyL)-2-ethylcyanoacrylat, 3-(5-(4-Chlorphenyl)-2-furyl)-2-ethylcyanoacrylat, 3-(5-Brom-2-furyl)-2-cyanoacrylat, 3-(5-(4-(Aminosulfonyl)phenyI)-2-furyl)-2-cyanoacrylat; oder des Typs
(b) mehrfunktionales Isocyanat mit der Formel V:
O=C=N-R-N=C=O (V)
wobei R eine aromatische oder aliphatische organische Gruppe ist, die Isocyanat- oder andere Funktionen enthalten kann,
und vorzugsweise ein Isocyanat, ausgewählt aus der Gruppe besehend aus: 1,6 Hexamethylendiisocyanat, Methylendphenyldiisocyanat, Toluen-2,4-diisocyanat, Toluen-2,6-diisocyanat, Isophorondiisocyanat, Naphtylen-1,5 Diisocyanat, Paraxylylendiisocyanat, m-Tetramethylxylendiisocyanat, Metaxylylendiisocyanat, Dicyclohexylmethan4,4'-diisocyanat, Triphenylmethantriisocyanat, 1, 6, 11-Undecantriisocyanat, 2,2-bis (Isocyanatmethyl)propylisocyanat, 4-(Isocyanatmethyl)-1,7-heptyldiisocyanat.

7. Selbstreparierendes Material nach mindestens einem der Ansprüche 1 oder 2, **dadurch gekennzeichnet, dass**, für den Fall, dass das geforderte Auslösemittel der Polymerisation, das natürlich in der Umgebung vorhanden ist, die relative Umgebungsfeuchtigkeit ist, die mindestens eine ausgewählte polymerisierbare Verbindung gewählt ist aus der Gruppe umfassend die Monomere und/oder die Oligomere und/oder die Präpolymere des Typs Silan mit der Formel (VI):
XₙSi(OR)₄₋ₙ (VI)
wobei:
- n gleich 0 oder 1 ist
- X eine funktionale Gruppe ist, ausgewählt wegen ihrer Kompatibilität mit dem Harz, dessen Silan die Haftung verbessern muss, wie z.B. eine Vinyl-, Acryl, Amino-, Mercapto- oder Epoygruppe,
und vorzugsweise ausgewählt aus den folgenden Verbindungen: Aminopropyltrimethoxysilan, Vinyltrimethoxysilan, Methacryloxytrimethoxysilan, Glycidoxypropyltrimethoxysilan, Mercaptopropyltrimethoxysilan, (N-2Aminoethyl)-aminopropyltrimethoxysilan, Tetraethoxysilan.

8. Selbstreparierendes Material nach mindestens einem der Ansprüche 1 oder 2, **dadurch gekennzeichnet, dass**, für den Fall, dass das Auslösemittel der Polymerisation, das natürlich in der Umgebung vorhanden ist, der Umgebungssauerstoff ist, die mindestens eine polymerisierbare Verbindung ausgewählt ist aus der Gruppe bestehend aus den trocknenden oder haltrocknenden Ölen, Verbindungen aus Glycerylestern aus verschiedenen linearen, gesättigten, einfach und mehrfach ungesättigten Fettsäuren, und vorzugsweise ausgewählt aus der Gruppe bestehend aus Leinöl, Perillaöl, Stillingiaöl, Nussöl, Aleuritenöl, Oiticicaöl, Isanoöl, dehydriertem Rizinusöl, Leindotteröl, Distelöl, Baumwollsaatöl, Mohnöl, Traubenkernöl, Sojaöl, Sonnenblumenkernöl.

9. Selbstreparierendes Material nach mindestens einem der Ansprüche 1 bis 8, **dadurch gekennzeichnet, dass** die Mikrokapseln, die die polymerisierbare Zusammensetzung alleine oder in Mischung mit einem Initiator der radikalischen oder kationischen Polymerisation enthalten, diametrale Abmessungen aufweisen, die im Intervall von 0,1 µm bis 500 µm liegen, jedoch vorzugsweise im Intervall von 0,5 µm bis 20 µm.

10. Selbstreparierendes Material nach mindestens einem der Ansprüche 1 bis 9, **dadurch gekennzeichnet, dass** es in seiner Masse oder auf seiner Oberfläche eine Vielzahl von drei Arten von mikroverkapselten polymerisierbaren Zusammensetzungen zur Selbstreparatur umfasst, wobei jede Art von Zusammensetzung spontan und selektiv in Anwesenheit eines Auslösemittels polymerisiert, das außerhalb des Materials liegt und natürlich in der Umgebung des Materials vorhanden ist, ausgewählt aus den Ultraviolettstrahlen, der Feuchtigkeit der Umgebungsluft und dem Sauerstoff in der Luft.

11. Verfahren zur Selbstreparatur eines organischen Materials, insbesondere eines Polymermaterials oder eines anorganischen Materials oder eines Verbundmaterials, **dadurch gekennzeichnet, dass** in das Material zur Selbstreparatur eine Vielzahl von zerbrechbaren Mikrokapseln integriert sind, umfassend mindestens eine Selbstreparaturzusammensetzung, bestehend aus mindestens einer flüssigen polymerisierbaren Verbindung, deren Polymerisation spontan in Anwesenheit eines Auslösemittels erfolgt, das außerhalb des Materials liegt und natürlich in der Umgebung des Materials vorhanden ist, ausgewählt aus den Ultraviolettstrahlen oder der Feuchtigkeit der Umgebungsluft oder dem Sauerstoff in der Luft, wobei das Material für die Polymerisation keinen Katalysator umfasst, so dass die Bildung eines Spalts in den Materialien zur Folge hat, dass die Mikrokapseln, die sich an der Stelle des Spalts befinden, brechen, und die flüssigen polymerisierbar Selbstreparaturzusammensetzung, die sie füllt, durch Kapillarität freisetzen und dort in Anwesenheit des Auslösungsmittels spontan polymerisiert.

12. Verfahren zur Selbstreparatur eines organischen Materials, insbesondere eines Polymermaterials, eines anorganischen Materials oder eines Verbundmaterials nach Anspruch 11, **dadurch gekennzeichnet, dass** die Mikrokapseln, die die Selbstreparaturzusammensetzung einschließen, in die Masse des Materials bei seiner Formgebung oder in einen Polymerfilm, der das Material bei seiner Formgebung auf der Oberfläche beschichtet, eingeschlossen sind.

13. Verwendung des Verfahrens zur Selbstreparatur nach einem der Ansprüche 11 oder 12 zur Herstellung von selbstreparierenden organischen, anorganischen oder Verbundmaterialien, die dazu ausgelegt sind, verschiedene Gegenstände und Geräte herzustellen, die verschiedenen Aktivitätsbereichen angehören, wie z.B.: Fahrzeuge zum Überlandtransport, Schiffskonstruktionen, Karosserien und Bauteile für Geräte und Maschinen, die für professionelle und häusliche Zwecke verwendet werden können, elektronische Bauteile und dergleichen.

14. Verwendung des Verfahrens zur Selbstreparatur nach mindestens einem der Ansprüche 11 oder 12 für die Herstellung von Gegenständen, die für das Gebiet der Raumfahrttechnik bestimmt sind.

15. Mikroverkapselte polymerisierbare Selbstreparaturzusammensetzung, bestehend aus mindestens einer ausgewählten polymerisierbaren Verbindung, die in organische, anorganische und Verbundmaterialien integriert werden soll, um Beschädigungen wie z.B. Spalten, Schlitze, Risse und dergleichen selbst zu reparieren, wenn diese sich in ihrer Betriebsumgebung ergeben, wobei die mindestens eine ausgewählte polymerisierbare Verbindung vorzugsweise ein Monomer und/oder ein Oligomer und/oder ein Präpolymer ist, wobei die Zusammensetzung **dadurch gekennzeichnet ist, dass** sie, nachdem Mikrokapseln freigesetzt wurden, in Anwesenheit des Umgebungssauerstoffs als Auslösemittel, das außerhalb der Materialien liegt, die selbst repariert werden sollen, jedoch in der Betriebsumgebung der Materialien natürlich vorhanden ist, spontan polymerisiert, wobei die mindestens eine polymerisierbare Verbindung ausgewählt ist aus der Gruppe bestehend aus den trocknenden oder haltrocknenden Ölen, Verbindungen aus Glycerylestern aus verschiedenen linearen, gesättigten, einfach und mehrfach ungesättigten Fettsäuren, und vorzugsweise ausgewählt aus der Gruppe bestehend aus Leinöl, Perillaöl, Stillingiaöl, Nussöl, Aleuritenöl, Oiticicaöl, Isanoöl, dehydriertem Rizinusöl, Leindotteröl, Distelöl, Baumwollsaatöl, Mohnöl, Traubenkernöl, Sojaöl, Sonnenblumenkernöl.

## Claims

1. Self-healing material, comprising in the mass or on the surface thereof, a plurality of frangible microcapsules containing a self-healing composition consisting of at least of one yielding polymerisable compound, and optionally one photo-primer mixed with said composition, **characterised in that** the polymerisation of the at least one yielding polymerisable compound occurs spontaneously in the presence of an external activation agent in respect of said material and naturally present in the operating environment of said material, selected from ultraviolet radiation or humidity in the ambient air or oxygen in the air, wherein said material comprises no catalyst for said polymerisation.

2. Self-healing material according to claim 1 **characterised in that** the microcapsules incorporated in said material contain a yielding self-healing polymerisable material for self-healing damage such as cracks, splits, crazing or other, as it occurs in the operating environment thereof, wherein said at least one polymerisable compound selected is preferably a monomer and/or an oligomer and/or a prepolymer.

3. Self-healing material according to at least one of claims 1 or 2 **characterised in that**, if the agent for activating polymerisation naturally present in the environment is ultraviolet radiation, the at least one polymerisable compound is selected
(a) from the group consisting of acrylic and/or methacrylic monomers and/or oligomers and/or prepolymers complying with formula (I): 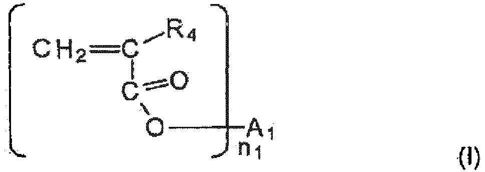 wherein
▪ R₄ is hydrogen or a methyl,
▪ A₁ is an organic residue,
▪ n₁ is an integer from 1 to 6 inclusive;
(b) or from the group consisting of epoxy, mono, di or tri-functional monomers and/or oligomers and/or prepolymers, complying with the general formula (II): 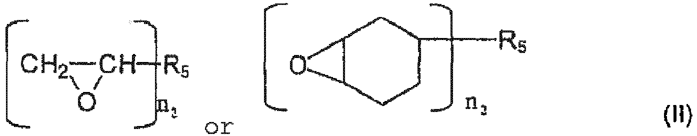
wherein n₂ is an integer from 1 to 3, and
R₅ is an organic radical residue;
(c) or in the group consisting of vinyl-ether monomers and/or oligomers and/or prepolymers, wherein these compounds comply with the following general formula (III):
R₆-(O-CH=CH₂)_{1 or 2} (III)
wherein R₆ is an organic derivative residue,

4. Self-healing material according to any of claims 1 to 3 **characterised in that**, when the at least one polymerisable compound is acrylic and/or methacrylic, a radical photo-primer is associated in a mixture with said composition, prior to encapsulation, wherein the mixture formed is microencapsulated and said radical photo-primer is preferably chosen from the group consisting of: 1-hydroxy-cyclohexyl-phenyl-ketone, benzophenone, 2-hydroxy-2-methyl-1-phenyl-1-propanone, methylbenzoylformate, α,α-dimethoxy-α-phenylacetophenone, 2-benzyl-2-(dimethylamino)-1-[4-(4-morpholinyl)phenyl]-1-butanone, 2-methyl-1-[4-(methylthio)phenyl]-2-(4-morpholinyl)-1-propanone, diphenyl (2,4,6-trimethylbenzoyl)-phosphine oxide, phosphine oxide, phenyl bis (2,4,6-trimethyl benzoyl)-phosphine oxide, phosphine oxide, phenyl bis(2,4,6-trimethyl benzoyl), bis (eta 5-2,4-cyclopentadien-1-yl)bis[2,6-difluoro-3-(1H-pyrrol-1-yl)phenyl]titanium.

5. Self-healing material according to at least one of claims 1 to 4 **characterised in that** the polymerisable compound concentrations of the self-healing polymerisable composition by means of UV radiation expressed as a % by weight, are as follows:
- 90 to 99%, preferably 95 to 99%, of said polymerisable compounds,
- 1 to 10% of said photo-primers, preferably 1% to 5%.

6. Self-healing material according to at least one of claims 1 or 2 **characterised in that**, if the agent for activating polymerisation naturally present in the environment is the ambient relative humidity, the at least one polymerisable compound selected is chosen from the group consisting of monomers and/or oligomers and/or prepolymers of the following type:
(a) mono or multifunctional cyanoacrylate having formula IV: 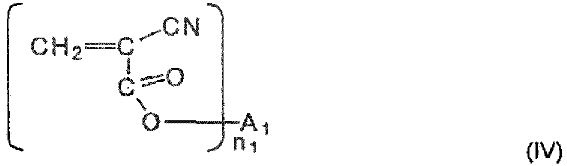
wherein: A₁ is an organic residue,
n₁ is an integer from 1 to 6,
and preferably a cyanoacrylate chosen from the following compounds: methyl cyanoacrylate, ethyl cyanoacrylate, diethyl 3,3'-(1,4-phenylene)bis(2-cyanoacrylate), ethyl 3-(3-chloro-4-methoxyphenyl)-2-cyanoacrylate, ethyl 2-cyanoacrylate, ethyl 3-(5-(2-chloro-5(trifluoromethyl)phenyl)-2-furyl)-2-cyanoacrylate, ethyl 3-(5-(2-chlorophenyl)-2-furyl)-2-cyanoacrylate, ethyl 3-(5-(3-chlorophenyl)-2-furyl)-2-cyanoacrylate, ethyl 3-(5-(4-chlorophenyl)-2-furyl)2-cyanoacrylate, 3-(5-bromo-2-furyl)-2-cyanoacrylate, 3-(5-(4(aminosulphonyl)phenyl)-2-furyl)-2cyanoacrylate;
or of the following type:
(b) multifunctional isocyanate having formula V:
O=C=N-R-N=C=O (V)
wherein R is an aromatic or aliphatic organic group suitable for containing isocyanate or other functions, and preferably an isocyanate chosen from the following compounds: 1,6 hexamethylene diisocyanate, methylene diphenyl diisocyanate, toluene-2-4-diisocyanate, toluene-2,6-diisocyanate, isophorone diisocyanate, naphthylene-1 5 diisocyanate, para-xylylene diisocyanate, m-tetramethylxylene diisocyanate, meta-xylylene diisocyanate, dicyclohexylmethane-4,4'-diisocyanate, triphenylmethane triisocyanate, 1, 6, 11-undecane triisocyanate, 2,2-bis (isocyanatomethyl) propyl isocyanate, 4-(isocyanatomethyl)-1,7-heptyl diisocyanate.

7. Self-healing material according to at least one of claims 1 or 2 **characterised in that**, if the agent for activating polymerisation naturally present in the environment used is the ambient relative humidity, the at least one selected polymerisable compound is chosen from the group consisting of silane monomers and/or oligomers and/or prepolymers having formula (VI):
XₙSi(OR)₄₋ₙ (VI)
wherein:
- n is equal to 0 or 1
- X is a functional group chosen for the compatibility thereof with the resin wherein the silane is to enhance adherence, such as a vinyl, acryl, amino, mercapto or epoxy group,
and preferably chosen from the following compounds: aminopropyl trimethoxysilane, vinyl trimethoxysilane, methacryloxy trimethoxysilane, glycidoxopropyl-trimethoxysilane, mercaptopropyl trimethoxysilane, (N-2-aminoethyl)-aminopropyl trimethoxy-silane, tetraethoxysilane.

8. Self-healing material according to at least one of claims 1 or 2 **characterised in that**, if the agent for activating polymerisation naturally present in the environment is ambient oxygen, the at least one at least one polymerisable compound is chosen from the group consisting of drying or semi-drying oils, various saturated, mono and polyunsaturated linear fatty acid glycerol ester compounds, and preferably chosen from the group consisting of linseed, perilla, stillingia, walnut, candlenut, oiticica, isano, dried castor, camelina, safflower, cotton, poppy seed, grape seed, soy bean or sunflower oil.

9. Self-healing material according to at least one of claims 1 to 8 **characterised in that** the microcapsules containing said polymerisable, alone or in a mixture with a radical or cationic polymerisation initiator, have diametral dimensions within the range from 0.1 µm to 500 µm, but preferentially within the range from 0.5 µm to 20 µm.

10. Self-healing material according to at least one of claims 1 to 9 **characterised in that** it comprises in the mass or on the surface thereof a plurality of three types of microencapsulated self-healing polymerisable compositions, wherein each of type of composition polymerises spontaneously and selectively in the present of an external activation agent with respect to said material and naturally present in the environment of said material, selected from ultraviolet radiation or humidity in the ambient air of oxygen in the air.

11. Method for self-healing an organic material, particularly a polymer material, or an inorganic material or a composite material, **characterised in that** said material for self-healing incorporates a plurality of frangible microcapsules containing at least one self-healing composition consisting of at least of one yielding polymerisable compound, wherein polymerisation occurs spontaneously in the presence of an external activation agent in respect of said material and naturally present in the environment of said material, selected from ultraviolet radiation or humidity in the ambient air or oxygen in the air, wherein said material comprises no catalyst for said polymerisation, such that the formation of a crack in said materials induces the rupture of the microcapsules situated at the location of the crack and release of the yielding self-healing polymerisable composition which fills the crack by capillarity and polymerises spontaneously in the presence of said activation agent.

12. Method for self-healing an organic material, particularly a polymer material, or an inorganic material or a composite material according to claim 11, **characterised in that** the microcapsules containing the self-healing composition are incorporated in the mass of said material, during the shaping thereof, or in a polymer film, coating the surface of said material during the shaping thereof.

13. Use of the self-healing method according to at least one of claims 11 or 12 for producing self-healing organic, inorganic or composite materials for producing various objects and devices belonging to various fields of activity, such as for example: land transport vehicles, naval constructions, bodywork and components of devices and machinery suitable for use at work or home, electronic or other components.

14. Use of the self-healing method according to at least one of claims 11 or 12 for producing objects intended for the aerospace field.

15. Microencapsulated self-healing polymerisable composition consisting of at least one selected polymerisable compound to be incorporated in organic, inorganic, composite materials for self-healing damage such as cracks, splits, crazing or other, as it occurs in the operating environment thereof, wherein said at least one polymerisable compound selected is preferably a monomer and/or an oligomer and/or a prepolymer, wherein said composition is **characterised in that**, once released, the microcapsules spontaneously polymerise in the presence of ambient oxygen as an external activation agent in respect of the materials for self-healing but naturally present in the operating environment of said materials, wherein said at least one polymerisable compound is chosen from the group consisting of drying or semi-drying oils, various saturated, mono and polyunsaturated linear fatty acid glycerol ester compounds, and preferably chosen from the group consisting of linseed, perilla, stillingia, walnut, candlenut, oiticica, isano, dried castor, camelina, safflower, cotton, poppy seed, grape seed, soy bean or sunflower oil.
